# EUROPEAN PATENT APPLICATION

(11) **EP 2 246 411 A1**
(43) Date of publication of application: **03.11.2010**
(21) Application number: 08871761.6
(22) Date of filing: 12.12.2008
(51) Int. Cl.: C10B 53/02

(54) **METHOD AND APPARATUS FOR PRODUCING COMBUSTIBLE GAS WITH BIOMASS**

(30) Priority: 08.01.2008 CN 200810019384
(71) Applicant: Liu, Wenzhen, Nanjing, Jiangsu 210036 (CN)
(72) Inventor: Liu, Wenzhen, Nanjing, Jiangsu 210036 (CN)
(74) Representative: Jacobi, Markus Alexander
(86) International application number: PCT/CN2008/002000
(87) International publication number: WO 2009/094826

(57) **Abstract**

This invention involves a method and plant of production of combustible gas using biomass. This plant comprises a furnace body, a furnace cavity, gasifying agent inlet, combustible gas outlet (arranged on furnace cavity and higher than gasifying agent inlet), and a device that ignites biomass arranged at intersection between the horizontal plane where the combustible gas outlet is located and the internal wall of the furnace cavity. Method of operation: load biomass in the plant and ignite the upper part; gasifying agent will run through the material from bottom to top, gasifying the material and generating flue gas. This invention features outstanding advantages of stable gasifying reaction, safe and reliable operation, high fuel gas calorific value, low environmental pollution, and easy purification of combustible gas etc. This method can be used to produce combustible gas from not only biomass, but also solid organic gasifying raw materials such as household garbage and industrial refuse etc.

## Description

### FILED OF THE INVENTION

This invention relates to the technology of biomass energy equipment, in particular a method and plant of production of combustible gas using biomass.

### BACKGROUND OF THE INVENTION

Biomass is a regenerative energy source that features the following: 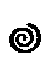 regeneration; 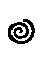 low pollution; 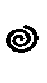 wide distribution. Use of biomass as alternative energy source can improve environment, in that acid rain and CO2 in atmosphere can be reduced, thereby has active significance in alleviating the "greenhouse effect". Volatile content of biomass is as high as above 70%. After being heated, biomass can release large amount of volatile matter at relatively low temperature. Therefore, gasifying technology is very suitable for conversion of biomass raw material. The high grade fuel gas generated by biomass gasification can be directly used as fuel for production and living purposes, and also used for internal combustion engine or gas turbine for power generation, to realize combined supply of heat and electric power.

According to fuel gas generation mechanism, gasification includes pyrolysis gasification and reactive gasification. The latter can be further classified into air gasification, steam gasification, oxygen gasification, and hydrogen gasification etc. according to different reaction gasification agent. According to different gasifying reaction furnaces used, gasification can be classified into fixed bed gasification, fluidized bed gasification, and entrained flow gasification.

At present, methods and plants of production of combustible gas from biomass available on the market mainly include upper suction type, lower suction type, and fluidized bed type etc. Among them, fluidized bed gasifying plant has structure, operation control, and detection means more complicated than those of upper and lower suction types, and requires fine grain size of particles entering furnace (normally less than 0.4mm). In addition, this process requires large investment. For these reasons, it is very difficult to promote this method in China. Upper suction type gasifying plant features safe operation, but has disadvantages of high tar content in fuel gas generated, difficult purification, unstable gasification process, and serious environmental pollution etc. Although the lower suction type gasifying plant features lower tar content, more stable gasification, and lower pollution as compared with upper suction type gasifying plant, it is subject to discontinuity between gasifying reaction levels, caving in, and burning-through etc., which adversely affect gasifying effect. In addition, due to slightly negative pressure operation, if sealing of the gasifying plant is not good, external air may enter the plant and be in contact with high temperature fuel gas, resulting in safety hazard.

### SUMMERY OF THE INVENTION

The purpose of this invention is to overcome aforesaid problems in upper and lower suction methods/plants, and provide a method and plant capable of safe and reliable operation, low tar content in fuel gas, stable gasification process, and low pollution.

The technical scheme of this invention is described below: a method to produce combustible gas from biomass, wherein dry biomass material is placed in the gasifying plant, biomass is led out and ignited from top of said biomass material, and gasifying agent is fed through lower part of said biomass material, so that this agent penetrates said biomass material from bottom to top.

Biomass can be led out and ignited from top of said biomass material and gasifying agent can be connected in through bottom of said biomass material.

Gasifying agent can be blown into said gasifying plant and combustible gas can be sucked from this plant.

Combustible gas produced can further pass a layer of biomass material, for purification of fuel gas and increase of calorific value.

A plant of production of combustible gas using biomass, comprising a furnace body, a furnace cavity, gasifying agent inlet, combustible gas outlet (said inlet and outlet arranged on furnace cavity internal wall; said outlet is higher than the gasifying agent inlet), and a device that ignites biomass arranged at intersection between the horizontal plane where said combustible gas outlet is located and the internal wall of said furnace cavity.

Said device that ignites biomass can be located at said combustible gas outlet.

Said device that ignites biomass can be ignition hole, gasoline or diesel burner, or coal gas, LNG, or NG burner.

Said gasifying agent inlet can be connected to a blower.

Said combustible gas outlet can be connected to combustible gas extraction equipment, e.g. ID fan and Roots fan.

Beneficial effects of this invention as compared with existing technologies are as follows:

1. Stable gasification reaction. During gasification, dry biomass material forms a reduction layer, an oxidation layer, a pyrolysis layer, and a drying layer from top to bottom. In this sequence, material density of these layers increases. This is totally different from traditional gasifying methods in which reduction layer and oxidation layer are under pyrolysis layer and drying layer. In this way, discontinuity between gasifying reaction levels, caving in, and burning-through etc. due to gravity can be avoided. This invention very much favors manufacture of large gasifying plants.

2. High calorific value of fuel gas and low environmental pollution. Since the reduction layer constantly expands downward during gasification reaction, the levels are stable, and the temperature is maintained at 700 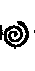 ∼900 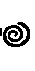 , so that CO2 generated by pyrolysis layer and oxidation layer is subject to reduction reaction to generate more CO, and tar in flue gas is subject to cracking when passing reduction layer to become combustible gas, so that tar content in fuel gas is greatly lowered, difficulty of subsequent fuel gas purification is lessened, environmental pollution is reduced, and fuel gas calorific value exceeds 5MJ/m3.

3. Safe and reliable operation. The gasifying plant of this invention operates under slight positive pressure and safety hazard due to poor seal and external air entering the plant and in contact with high temperature fuel gas is avoided. The gasifying plant of this invention can be shutdown at any time, and the danger of accidental shutdown as present in lower suction type plant is avoided.

From above description, it can be seen that the method and plant of this invention have broken through traditional practice of biomass gasification. By means of simple and practical means, gasification reaction levels have been improved to provide outstanding advantages of stable gasification reaction, safe and reliable operation, high calorific value of fuel gas, low environmental protection, and easy purification of fuel gas. This invention is not only applicable to production of combustible gas from biomass, but also from solid organic gasification raw materials such as household garbage and industrial refuse etc.

### BRIEF DESCRIPTION OF THE DRAWINGS

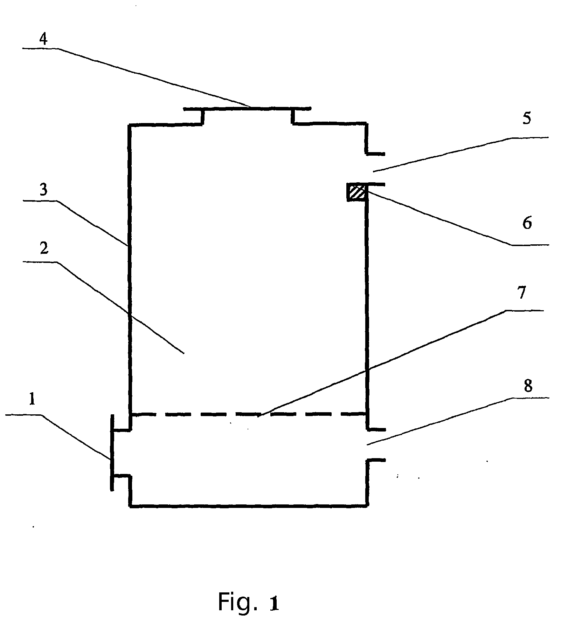

FIG. 1 shows a structural schematic of the gasifying plant of this invention.;
In the figure: 1. Ash discharge port; 2. Furnace cavity; 3. Furnace body; 4. Material filling port; 5. Fuel gas outlet; 6. Ignition device; 7. Furnace grate; 8. Air inlet.

### DETAILED DESCRIPTION OF PARTICULAR EMBODIMENTS OF THE INVENTION

The following describes this invention in details in combination with the figure below and preferred embodiments.

As shown in Fig.1, gasifying plant of this invention comprises furnace body 3, furnace cavity 2, material filling port 4, fuel gas outlet 5, ignition device 6, air inlet 8, ash discharge port 1, and furnace grate 7 etc. Interior of furnace body 3 is furnace cavity 2 of cylindrical shape. On top of furnace body 3, material filling port 4 is provided. On upper part of internal wall of furnace cavity 2, fuel gas outlet 5 is opened and can be connected to fuel gas extraction equipment, such as ID fan and Roots fan. On lower part of internal wall of furnace cavity 2, air inlet 8 is opened and can be connected to a blower. On internal wall of furnace cavity 2 near fuel gas outlet 5, ignition device 6 is provided and can be ignition hole, gasoline or diesel burner, or coal gas or LNG or NG burner. At power part of furnace cavity 2, furnace grate 7 is provided. At lower part of furnace body 3, ash discharge port 1 is provided.

Preferred embodiment 1: Dry biomass material is added into furnace cavity 2 via filling port 4, to the height of fuel gas outlet 5. Fuel gas outlet 5 and air inlet 8 are kept open, while ash discharge port 1 and material filling port are closed. Via ignition device 6, biomass material is ignited and air is blown into furnace cavity 2 via air inlet 8. This air will pass through furnace grate 7 from bottom to top, and go through dry biomass material. At the point of ignition, gasifying agent and dry biomass material will undergo oxidation combustion reaction, to form the oxidation layer of gasifying reaction.

Under the action of air, the oxidation layer moves from point of ignition at upper part of material down. Since the air first undergoes oxidation combustion reaction with material at lower part of the oxidation layer, upper part material of the oxidation layer gets less and less air for oxidation reaction, gradually forming a reduction layer consisting of hot biomass charcoal above oxidation layer, which moves down along with the oxidation layer and constantly expands downward. Most heat generated by the oxidation layer is transferred to the reduction layer through gas flow convection from bottom to top, supplying the heat required for reduction reaction. Another part of this heat is transferred to the material below oxidation layer via thermal radiation, forming a pyrolysis layer and a drying layer, which move down along with the oxidation layer.

Up to this point, in the gasifying plant of this invention, dynamic reduction layer, oxidation layer, pyrolysis layer, and drying layer form from top to bottom, and the reduction layer gradually expands downward, with oxidation layer, pyrolysis layer, and drying layer stably moving down. By a series of steps, biomass becomes gas fuel: biomass fuel gas.

Preferred embodiment 2: Remove furnace grate 7 from furnace cavity 2. Load dry biomass material into furnace cavity 2 via filling port 4, to 10-30cm higher than fuel gas outlet 5, while making this material in contact with bottom of furnace cavity 2. Keep flue gas outlet 5 and air inlet 8 open, and close ash discharge port 1 and material filling port 4. Via the ignition device 6, ignite biomass material. Blow air into furnace cavity 2 via air inlet 8. This air will move from bottom to top (starting from air inlet 8) to pass dry biomass material. Gasifying agent and dry biomass material undergo oxidation combustion reaction from the point of ignition, forming oxidation layer of gasification reaction.

Subsequent gasification reaction and gasification reaction levels formed are the same as preferred embodiment 1. The part of the material higher than fuel gas outlet 5 will gradually fall into reduction layer due to reducing volume of material of the underlying reduction layer, oxidation layer, pyrolysis layer, and drying layer. The part of material lower than air inlet 8 will gradually dry and get pyrolyzed under thermal radiation.

Preferred embodiment 3: Load dry biomass material into furnace cavity 2 via filling port 4, to the height of fuel gas outlet 5. Keep fuel gas outlet 5 and air inlet 8 open, and close ash discharge port 1 and material filling port 4. By means of ignition device 6, ignite biomass material. Blow air into furnace cavity 2 via air inlet 8. This air will penetrate furnace grate 7 and pass through dry biomass material from bottom to top. At point of ignition, gasifying agent and dry biomass material will undergo oxidation combustion reaction, forming the oxidation layer in gasification reaction. Subsequent gasifying reactions and gasifying reaction levels formed are the same as preferred embodiment 1.

Fuel gas outlet 5 is connected to fuel gas extraction equipment, e.g. ID fan or Roots fan, so that combustible gas produced will pass a container filled with biomass material, to purify fuel gas and increase its calorific value.

While the preferred embodiment of the present invention has been described in conjunction with the drawings, the present invention is not limited to the above embodiment. The above embodiment is only illustrative and not limitative. Without departing from the spirit of the present invention and the scope sought for protection by the claims, a person skilled in the art can further make a lot of forms, all of which belong to the protection scope of the present invention.

## Claims

1. A method to produce combustible gas from biomass, which includes placing dry biomass material in a gasifying plant, wherein biomass is led out and ignited from top of said biomass material and gasifying agent is fed in from bottom of said biomass material, so that this agent penetrates said biomass material from bottom to top.

2. The method to produce combustible gas from biomass of claim 1, wherein biomass is led out and ignited from top of said biomass material.

3. The method to produce combustible gas from biomass of claim 1, wherein gasifying agent is fed in from bottom of said biomass material.

4. The method to produce combustible gas from biomass of claim 1, wherein said combustible gas produced is made to pass a further layer of biomass material.

5. The method to produce combustible gas from biomass of claim 1, wherein gasifying agent is blown into said gasifying plant.

6. The method to produce combustible gas from biomass of any of claims 1 to 5,
wherein combustible gas is sucked from said gasifying plant.

7. A plant that produces combustible gas from biomass, comprising a furnace body, a furnace cavity, a gasifying agent inlet, and a combustible gas outlet; said gasifying agent inlet and combustible gas outlet are arranged on internal wall of said furnace cavity and said combustible gas outlet is higher than said gasifying agent inlet; and a device that ignites biomass is arranged at intersection between the horizontal plane where said combustible gas outlet is located and the internal wall of said furnace cavity.

8. The plant that produces combustible gas from biomass of claim 7, wherein said biomass ignition device is located at said combustible gas outlet.

9. The plant that produces combustible gas from biomass of claim 7, wherein said device of biomass ignition is an ignition hole.

10. The plant that produces combustible gas from biomass of claim 7, wherein said - biomass ignition device is a gasoline or diesel burner.

11. The plant that produces combustible gas from biomass of claim 7, wherein said biomass ignition device is a coal gas or LNG or NG burner.

12. The plant that produces combustible gas from biomass of any of claims 7-11, wherein said gasifying agent inlet is connected to a blower.

13. The plant that produces combustible gas from biomass of any of claims 7-11, wherein said combustible gas outlet is connected to combustible gas extraction equipment.
